# EUROPEAN PATENT APPLICATION

(11) **EP 1 298 169 A1**
(43) Date of publication of application: **02.04.2003**
(21) Application number: 01941187.5
(22) Date of filing: 22.06.2001
(51) Int. Cl.: C08L 33/06, C08L 71/02, C08K 3/10, C08K 5/07, C08K 5/17, C08K 9/02

(54) **COLD-SETTING COMPOSITION**

(30) Priority: 28.06.2000 JP 2000193927; 28.06.2000 JP 2000193928; 11.10.2000 JP 2000310046
(71) Applicant: THREE BOND CO., LTD., Hachioji-shi Tokyo 193-0941 (JP)
(72) Inventor: HAO, Jianqiang, Hachioji-shi, Tokyo 193-0941 (JP)
(74) Representative: Weigelt, Udo
(86) International application number: JP0105370
(87) International publication number: WO02000784

(57) **Abstract**

The invention provides a room-temperature-curing composition which comprises (A) a polymer ingredient comprising a copolymer (A1) which contains a silicon having a hydrolyzable functional group and has a molecular chain substantially comprising (a) alkyl (meth)acrylate monomer units having an alkyl group having 1 to 8 carbon atoms and (b) alkyl (meth)acrylate monomer units having an alkyl group having 10 to 30 carbon atoms, (B) a moisture curing catalyst, and (C) any of the following (C1) to (C3): (C1) a metal salt hydrate; (C2) a primary amine compound (C2a) and a compound having a carbonyl groups (C2b); and (C3) an inorganic filler surface-treated with a silicate. The room-temperature-curing composition of the invention is excellent in rapid curing property, depth curability, and workability.

## Description

### <Technical Field>

The present invention relates to a room-temperature-curing composition having silicon bonded to a hydrolyzable functional group. Particularly, it relates to a room-temperature-curing composition which has excellent depth curability and is useful as a sealing material for motor vehicles and buildings, industrial sealing material, adhesive, coating material, encapsulating material or potting material for electrical/electronic use, multipurpose adhesive, or the like.

### <Background Art>

Silicone compositions which polymerize through chemical reactions by the action of atmospheric moisture are known, and are used as sealing materials, adhesives, coating materials, and potting materials. In silicone compositions, silicon atoms having a hydrolyzable functional group form siloxane bonds by the action of atmospheric moisture. Since the adhesives, after having been applied, cure upon exposure to the air, there is no need of an energy given, for example, by heating or light irradiation. These adhesives are hence advantageous also from the standpoints of environment, cost, etc.

Silicone compositions comprise a polymer of silicon through siloxane bonds. Although silicon compositions are excellent in heat resistance and flexibility, they have drawbacks, for example, that cured products thereof are porous and are apt to be attacked by ionic substances. Due to the drawbacks, they are often unsuitable depending on portions to which they are to be applied as adhesives or sealing materials.

On the other hand, so-called modified silicones such as an oxyalkylene polymer containing, at a terminal thereof, a silicon having a hydrolyzable functional group, or a (meth)acrylic ester copolymer containing, at a terminal thereof, a silicon having a hydrolyzable functional group are also used as moisture-curing resins.
In particular, the modified silicones having such constitutions have advantages of excellent bonding strength, etc.

One-component type room-temperature-curing modified silicone compositions show satisfactory rapid curing properties and adhesion properties in the presence of moisture. However, there is a problem that when the adhesion area is large or an adherend has poor moisture permeability, then much time is required for inner parts of the adherend to cure or the inner parts may remain uncured because of the absence of moisture. In the case where the one-component type compositions are used as potting materials, much time is required for deep parts to cure. On the other hand, two-component type room-temperature-curing modified silicone compositions not only have satisfactory rapid curing properties but also show rapid curing with respect to the cure of depth. However, since the mixing ratio of the two components is not 1:1, metering is difficult and the mixing is hardly adapted for an automatic mixer or the like. There may be a two-component type modified silicone composition based on a dehydration reaction of an amine with a ketone. However, since the amine and ketone used are volatile, they adversely influence the working atmosphere. In addition, the amine and ketone volatilize during application and this results in a change in the amount of water yielded and is hence causative of fluctuations in curing rate.

Accordingly, an object of the invention is to provide a room-temperature-curing modified silicone composition which has satisfactory rapid curing properties and depth curability in combination.

Another object of the invention is to provide a room-temperature-curing modified silicone composition which has a further feature that it contains no volatile organics.

### <Disclosure of the Invention>

The present inventor made extensive investigations in order to overcome the problems described above. As a result, it was found that those objects of the invention can be achieved by providing a room-temperature-curing composition which comprises (A) a polymer ingredient comprising a copolymer (A1) which contains a silicon having a hydrolyzable functional group and has a molecular chain substantially comprising (a) alkyl (meth)acrylate monomer units having an alkyl group having 1 to 8 carbon atoms and (b) alkyl (meth)acrylate monomer units having an alkyl group having 10 to 30 carbon atoms, (B) a moisture curing catalyst, and (C) any of the following (C1) to (C3): (C1) a metal salt hydrate; (C2) a primary amine compound (C2a) and a compound having a carbonyl group (C2b); and (C3) an inorganic filler surface-treated with a silicate. The invention has thus been completed. In a preferred embodiment, an oxyalkylene polymer (A2) containing a silicon having a hydrolyzable functional group is further added to ingredient (A), whereby a room-temperature-curing composition having further excellent properties can be obtained.

### <Best Mode for Carrying Out the Invention>

The invention will be described in detail below. Ingredient (A) to be used in the invention comprises a (meth)acrylic copolymer which contains a silicon having a hydrolyzable functional group and is constituted by the monomer units (a) and (b) (hereinafter referred to as copolymer (A1)). The alkyl (meth)acrylate monomer units (a) having an alkyl group having 1 to 8 carbon atoms, which constitutes the copolymer (A1), are represented by the following general formula (I): 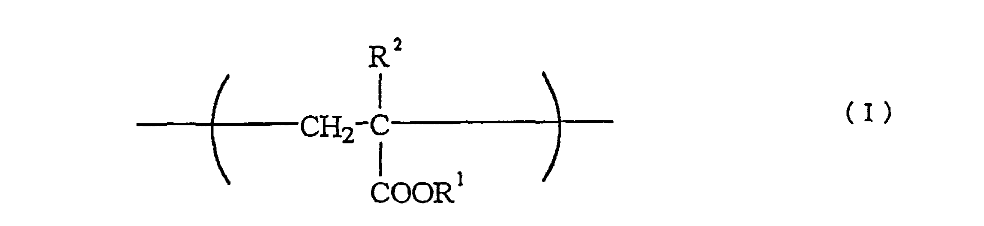 (wherein R¹ represents an alkyl group having 1 to 8 carbon atoms and R² represents a hydrogen atom or a methyl group).

The alkyl (meth)acrylate monomer units (b) having an alkyl group having 10 or more carbon atoms, which constitutes the copolymer (A1), are represented by the following general formula (II): 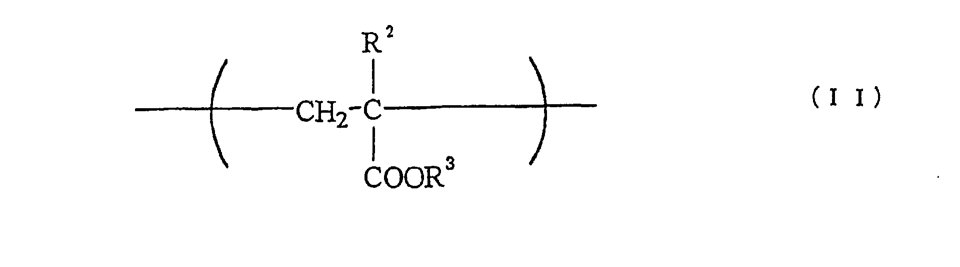 (wherein R² is the same as defined above and R³ represents an alkyl group having 10 or more carbon atoms).

Examples of R¹ in general formula (I) include alkyl groups having 1 to 8 carbon atoms, such as methyl, ethyl, propyl, n-butyl, t-butyl, and 2-ethylhexyl. Preferred examples thereof include those having 1 to 4 carbon atoms, and more preferred examples include those having 1 or 2 carbon atoms. The alkyl groups R¹ in the respective structural units may be the same or different.

Examples of R³ in general formula (II) include long-chain alkyl groups having 10 or more, generally from 10 to 30 carbon atoms, such as lauryl, tridecyl, cetyl, stearyl, alkyl groups having 22 carbon atoms, and behenyl. Preferred examples thereof include long-chain alkyl groups having 10 to 20 carbon atoms. The alkyl groups R³ in the respective structural units may be the same or different, as in the case of R¹. For example, the alkyl groups may be a mixture of two or more kinds, such as a mixture of ones having 12 carbon atoms and ones having 13 carbon atoms.

The molecular chain of the copolymer (A1) substantially comprises the monomer units (a) and (b). The term "substantially" means that the total amount of the monomer units (a) and (b) present in the copolymer (A1) exceeds 50% by weight thereof. The total amount of the monomer units (a) and (b) is preferably 70% by weight or more. The proportion of the monomer units (a) to the monomer units (b) is preferably from 95:5 to 40:60, more preferably from 90:10 to 60:40, in terms of weight ratio.

Examples of other monomer units which may be contained in the copolymer (A1) in addition to monomer units (a) and (b) include monomer units derived from: acrylic acids such as acrylic acid and methacrylic acid; monomers containing an amide group, such as acrylamide, methacrylamide, N-methylolacrylamide and N-methylolmethacrylamide, containing an epoxy group, such as glycidyl acrylate and glycidyl methacrylate, or containing an amino group, such as diethylaminoethyl acrylate, diethylaminoethyl methacrylate and aminoethyl vinyl ether; and other monomers including acrylonitrile, iminol methacrylate, styrene, α-methylstyrene, alkyl vinyl ethers, vinyl chloride, vinyl acetate, vinyl propionate and ethylene. The copolymer (A1) preferably has a number-average molecular weight of from 500 to 100,000 from the standpoint of ease of handling.

The copolymer (A1) comprises a (meth)acrylic copolymer comprising monomer units (a) and (b) and, bonded to the copolymer, a silicon having a hydrolyzable functional group. The silicon having a hydrolyzable functional group is capable of being crosslinked through formation of a siloxane bond, and is a silicon functional group bonded to a hydrolyzable group. This is a well known functional group and is characterized by being crosslinkable even at room temperature. Examples of the hydrolyzable functional groups include halogen atoms, hydrogen atom, alkoxy groups, acyloxy groups, ketoximate groups, amino group, amide group, aminoxy group, mercapto group, alkenyloxy groups, and the like. Preferred of these are alkoxy groups such as methoxy and ethoxy from the standpoint of mild hydrolyzability.

The number of the hydrolyzable functional groups possessed by the hydrolyzable functional group-containing silicon is preferably 2 per silicon. In the copolymer (A1), the number of the hydrolyzable functional group-containing silicon may be 1 or larger on the average from the standpoint of obtaining sufficient curability. However, the number thereof is preferably 1.1 or larger, especially preferably 1.5 or larger. Furthermore, the silicon atoms are preferably present such that the number-average molecular weight per the reactive silicone functional group is apparently from 300 to 4,000.

The (meth)acrylic copolymer comprising the monomer units (a) and (b) for use in the invention may be obtained by polymerizing, in accordance with an ordinary solution polymerization method, bulk polymerization method or the like, monomers which give units represented by general formulae (I) and (II) through vinyl polymerization, e.g., vinyl polymerization by radical reaction. The monomers are reacted at from 50 to 150°C together with a free-radical initiator or the like according to need. Preferably, a chain-transfer agent such as n-dodecyl mercaptan or t-dodecyl mercaptan is added thereto according to need in order to obtain a copolymer having a number-average molecular weight of 500 to 100,000. A solvent may be either used or not used. However, in the case of using a solvent, the solvent is preferably an unreactive solvent such as an ether, hydrocarbon, or acetic ester.

Various methods are usable for incorporating the hydrolyzable functional group-containing silicon into the (meth)acrylic copolymer. Examples thereof include: a method in which a compound having a polymerizable unsaturated bond and a reactive silicone functional group (e.g., CH₂=CHSi(OCH₃)₃)₃ is added to monomers giving units represented by general formulae (I) and (II) and these ingredients are copolymerized; a method in which a compound having a polymerizable unsaturated bond and a reactive functional group (e.g., acrylic acid) is added to monomers giving units represented by general formulae (I) and (II) and copolymerized therewith and the copolymer yielded is then reacted with a compound having a hydrolyzable functional group and a functional group reactive with the reactive functional group (e.g., a compound having an isocyanate group and -Si(OCH₃)₃ group); and the like. Such production methods are described in detail in Japanese Patent Laid-Open No. 112642/1988.

In addition to the copolymer (A1) described above, ingredient (A) may further comprise an oxyalkylene polymer (A2) containing a silicon having a hydrolyzable functional group. Examples of the oxyalkylene polymer include those in which the oxyalkylene units constituting the main chain are -CH₂CH₂O-, -CH₂CH(CH₃)O-, -CH₂CH(CH₂CH₃)O-, -CH₂CH₂CH₂CH₂O-, or the like. However, those in which the main chain is constituted by -CH₂CH(CH₃)O- units are especially preferred from the standpoints of availability and cost. As a matter of course, not only one kind of the oxyalkylene unit, but also a mixture of the units of two or more kinds may be used to constitute the main chain.

The incorporation of the silicon group having a hydrolyzable functional group into each end of the main chain constituted by such oxyalkylene units can be accomplished, for example, by subjecting an oxyalkylene polymer having an allyl group at each end and a hydrosilane having a silicon group having a hydrolyzable functional group to an addition reaction in the presence of a platinum catalyst.

Examples of ingredient (A) to be used in the invention include those manufactured by Kaneka Corp. and sold under the trade names of MS Polymer, MA Polymer, etc.

Examples of the moisture curing catalyst as ingredient (B) include moisture curing catalysts for use in moisture-curing silicones, such as carboxylic acid metal salts, alkoxytitaniums, and the like. Specific examples thereof include metal salts of organic carboxylic acids, such as dibutyltin bistriethoxysilicate, dibutyltin dimethoxide, dibutyltin diacetate, dibutyltin dilaurate, butyltin tri-2-ethylhexoate, lead 2-ethyloctoate, iron 2-ethylhexoate, cobalt 2-ethylhexoate, manganese 2-ethylhexoate, zinc 2-ethylhexoate, stannous caprylate, tin naphthenate, tin oleate, tin butyrate, tin naphthenate, zinc naphthenate, cobalt naphthenate, and zinc stearate; organic titanic acid esters such as tetrabutyl titanate, tetra-2-ethylhexyl titanate, triethanolamine titanate, and tetra(isopropenyloxy) titanate; organotitanium compounds such as organosiloxytitaniums and β-carbonyltitaniums; alkoxyaluminum compounds; quaternary ammonium salts such as benzyltriethylammonium acetate; lower fatty acid alkali metal salts such as potassium acetate, sodium acetate, and lithium oxalate; dialkylhydroxylamines such as dimethylhydroxyamine and diethylhydroxyamine; and the like. More preferred of these are chelate compounds such as dibutyltin dimethoxide and dibutyltin bisacetylacetonate because these compounds have high catalytic activity in room-temperature curing and enable the curing composition to have a higher curing rate. These curing catalysts may be used singly or in combination of two or more thereof.

The amount of the moisture curing catalyst to be used is preferably from 0.01 to 10 parts, especially preferably from 0.1 to 5 parts, per 100 parts of the total weight of the room-temperature-curing composition (all "parts" in this description mean "parts by weight"). Too small amounts of the moisture curing catalyst are undesirable in that the composition to be obtained has a reduced curing rate. On the other hand, too large amounts thereof are undesirable in that not only the cured resin to be obtained is deteriorated in properties such as tensile properties but also the composition is economically disadvantageous.

Ingredient (C1) in the invention is a metal salt hydrate which functions as water or a water source. This ingredient functions as a water source which supplies water necessary for the condensation and curing of the room-temperature-curing composition, and accelerates the formation of a crosslinked structure. A wide range of metal salt hydrates generally on the market can be used. Examples thereof include hydrates of alkaline earth metal salts, and hydrates of other metal salts. Specific examples thereof include Al₂O₃·H₂O, Al₂O₃·3H₂O, Al₂(SO₄)₃·18H₂O, Al₂(C₂O₄)₃·4H₂O, AlNa(SO₄)₂·12H₂O, AlK(SO₄)₂·12H2O, BaCl₂·₂H₂O, Ba(OH)₂·8H₂O, CaSO₄·2H₂O, CaS₂O₃·6H₂O, Ca(NO₃)₂·4H₂O, CaHPO₄·2H₂O, Ca(C₂O₄)·H₂O, Co(NO₃)₂·6H₂O, Co(CH₃COO)₂·4H₂O, CuCl₂·2H₂O, CuSO₄·5H₂O, FeCl₂·4H₂O, FeCl₃·6H₂O, FeSO₄·7H₂O,
Fe(NH₄) (SO₄)₂·12H₂O, K₂CO₃·1.5H₂O, KNaCO₃·6H₂O, LiBr·2H₂O, Li₂SO₄·H2O, MgSO₄·H₂O, MgSO₄·7H₂O, MgHPO₄·7H₂O, Mg₃(PO₄)₂·8H₂O, MgCO₃·3H₂O, Mg₄(CO₃)₃(OH)₂·3H₂O, MoO₃·2H₂O, NaBr·2H₂O, Na₂SO₃·7H₂O, Na₂SO₄·10H₂O, Na₂S₂O₃·5H₂O, Na₂S₂O₆·2H₂O, Na₂B₄O₇·10H₂O, NaHPHO₃·2.5H₂O, Na₃PO₄·12H₂O, Na₂CO₃·H₂O, Na₂CO₃·7H₂O,
Na₂CO₃·10H₂O, NaCH₃COO·3H₂O, NaHC₂O₄·H₂O, NiSO₄·6H₂O, NiC₂O₄·2H₂O, SnO₂·nH₂O, NiC₂O₄·2H₂O, Sn(SO₄)₂·2H₂O, ZnSO₃·2H₂O, ZnSO₄·7H₂O, Zn₃(PO₄)2·4H₂O, Zn(CH₃COO)₂·2H₂O, and the like. However, ingredient (C1) is not limited thereto.

Preferred of those are the hydrates of alkali metal salts and the hydrates of alkaline earth metal salts. Specific examples thereof include CaSO₄·2H₂O, MgSO₄·7H₂O, Na₂CO₃·10H₂O, Na₂SO₄·10H₂O, Na₂S₂O₃·5H₂O, Na₃PO₄·12H₂O, Na₂B₄O₇·10H₂O, and the like. Of these, CaSO₄·2H₂O is especially desirable for use as a filler and a water source for the room-temperature-curing composition because it is inexpensive and easily available and is commercially available in the form of a fine powder.

The amount of the water or metal salt hydrate to be incorporated as ingredient (C1) is preferably about from 0.1 to 200 parts, more preferably from 1 to 100 parts, per 100 parts of ingredient (A). When the amount of the water or metal salt hydrate incorporated is smaller than that range, there may be cases where the curing rate decreases. On the other hand, when the amount of the water or metal salt hydrate incorporated is larger than that range, there may be cases where properties of the cured resin and adhesive properties are deteriorated. The metal salt hydrates shown above may be used singly or as a mixture of two or more thereof.

The primary amine compound as ingredient (C2a) is, for example, an alkylamine, cycloalkylamine, diamine, alkenylamine, arylamine, amino-modified silane, amino-modified siloxane and partial hydrolyzate thereof, or the like.

Examples of the alkylamine include methylamine, ethylamine, propylamine, butylamine, hexylamine, and the like. Examples of the cycloalkylamine include cyclopentylamine, cyclohexylamine, and the like. Examples of the diamine include ethylenediamine, hexamethylenediamine, and the like.

Examples of the alkenylamine include vinylamine, allylamine, and the like. Examples of the arylamine include aniline and the like. Examples of the amino-modified silane include γ-aminopropylmethyldimethoxysilane, γ-aminopropyltrimethoxysilane, γ-aminopropylmethyldimethoxysilane, γ-aminopropyltriethoxysilane, N-β-aminoethyl-γ-aminopropyltrimethoxysilane, N-β-aminoethyl-γ-aminopropylmethyldimethoxysilane, and the like. Examples of the amino-modified siloxane include γ-aminopropylpentamethyidisiloxane, γ-aminopropylheptamethyltetracyclosiloxane, 1,2-di(γ-aminopropyl)tetramethyldisiloxane, 1-γ-aminopropyl-2,3-isopropylhexamethyltetracyclosiloxane, α,ω-trimethylsiloxypoly(γ-aminopropylmethyl) siloxane, α,ω-trimethylsiloxypoly[N-β-(aminoethyl)-γ-aminopropylmethyl]siloxane, and the like.

Of those primary amine compounds, preferred are butylamine, cyclohexylamine, γ-aminopropyltrimethoxysilane, and γ-aminopropyltriethoxysilane. The amount of ingredient (C2a) to be incorporated is preferably from 0.1 to 20 parts, more preferably from 1 to 10 parts, per 100 parts of ingredient (A). In case where the amount of this primary amine compound (C2a) is too small, the composition cannot have sufficient depth curability. On the other hand, too large amounts thereof arose disadvantages, for example, that this ingredient (C2a) dissolves out from the cured resin to cause environmental pollution, etc., and the cured resin obtained has deteriorated tensile strength.

Examples of the compound having a carbonyl group, as ingredient (C2b), include saturated monocyclic compounds having one carbonyl group, saturated monocyclic compounds having two carbonyl groups, unsaturated monocyclic compounds having one carbonyl group, unsaturated monocyclic compounds having two carbonyl groups, bicyclic compounds in which one of the rings is an aromatic ring and which have one or two carbonyl groups, saturated aliphatic ketones, unsaturated aliphatic ketones, and mixed ketones comprising an aliphatic moiety and a carbocycle or heterocycle.

Examples of the saturated monocyclic compounds having one carbonyl group include cyclobutanone, cyclopentanone, 2-methylcyclopentanone, 3-methylcyclopenatanone, 2-methyl-2-carboxymethylcyclopentanone, 2,2-dimethylcyclopentanone, 2-(2-octenyl) cyclopentanone, 2-(3,7-dimethyl-2,6-octadienyl)cyclopentanone, 2-cyclopentylidenecyclopentanone, 2-benzylidenecyclopentanone, 2-[(p-chloro)benzylidene]cyclopentanone, 2-methyl-2-carboxymethyl-5-[(p-chloro)benzylidene]cyclopentanone, 2,4-dimethylcyclopentanone, 2,5-dimethylcyclopentanone, 3,4-dimethylcyclopentanone, 2,2,4-trimethylcyclopentanone, 5-methyl-2- (1-methylethylidene) cyclohexanone, 6-ketoprostagladin E1, prostagladin E2 methyl ester, prostagladin D2, cyclohexanone, 3-methylcyclohexanone, 4-n-pentylcyclohexanone, 2-benzylidenecyclohexanone, 2-(N,N-dimethylamino) cyclohexanone, 3,5-dimethylcyclohexanone, dihydrocarvone, cycloheptanone, cyclooctanone, and cycloheptadecanone.

Examples of the saturated monocyclic compounds having two carbonyl groups include 1,3-cyclopentanedione, 2-allyl-2-methyl-1,3-cyclopentanedione, 3,3-dimethyl-1,2-cyclopentanedione, 3,4-dimethyl-1,2-cyclopentanedione, 1,2-cyclohexanedione, 1,3-cyclohexanedione, 1,4-cyclohexanedione, and 1,2-cycloheptanedione.

Examples of the unsaturated monocyclic compounds having one carbonyl group include 2-cyclopentenone, 3-methyl-2-cyclopentenone, 4,4-dimethyl-2-cyclopentenone, 2-pentyl-2-cyclopentenone, 3-ethoxy-2-cyclopentenone, 2-hydroxy-3-ethyl-2-cyclopentenone, prostagladin J2, jasmone, 2-hydroxy-3,4-dimethyl-2-cyclopentenone, 15-oxoprostagladin E2, 2-ethoxy-2-cyclohexenone, 3-bromo-2-cyclohexenone, carvone, 8-hydroxycarvotanacetone, 2-methyl-5-(1-methylethenyl)-2-cyclohexenone, 3,5,5-trimethyl-2-cyclohexenone, abscisic acid methyl ester, 2-hydroxy-3-methyl-6-(1-methylethyl)-2-cyclohexenone, and 5-cyclohexadecenone.

Examples of the unsaturated monocyclic compounds having two carbonyl groups include 2-cyclopentene-1,4-dione and 4-hydroxy-5-methyl-4-cyclopentene-1,3-dione.

Examples of the saturated bicyclic compounds having one or two carbonyl groups include camphor-norcamphor, 3-bromocamphor, 2,3-bornanedione, 1-decalone, 2-decalone, and N- (ethoxycarbonyl)nortropinone.

Examples of the bicyclic compounds in which one of the rings is an aromatic ring and which have one or two carbonyl groups include 2-indanone, 2-methyl-1-indanone, 4-methyl-1-indanone, 4-methoxy-1-indanone, 6-methoxy-1-indanone, 4-hydroxy-1-indanone, 5-bromo-1-indanone, 1,3-inndione, 1-tetralone, 2-tetralone, 4-methyl-1-tetralone, 5,7-dimethyl-1-tetralone, 5-methoxy-1-tetralone, 6,7-dimethoxy-1-tetralone, 5-hydroxy-1-tetralone, and levobunolol.

Examples of the saturated aliphatic ketones include acetone, methyl ethyl ketone, methyl isopropyl ketone, methyl isobutyl ketone, 2-pentanone, 3-pentanone, 2-carboxymethyl-3-pentanone, 2-hexanone, 3-hexanone, 5-methyl-2-hexanone, 2-heptanone, 3-heptanone, 4-heptanone, 2-octanone, 3-octanone, diisobutyl ketone, 5-methyl-2-octanone, 2-nonanone, 2,6,8-trimethyl-4-nonanone, 1,3-dihydroxy-2-propanone, diacetone alcohol, triacetone dialcohol, and 4-methoxy-4-methyl-2-pentanone.

Examples of the unsaturated aliphatic ketones include mesityl oxide, 3-buten-2-one, 4-methyl-4-penten-2-one, aliphatic diketones, 2,3-pentanedione, 2,3-hexanedione, 3,4-hexanedione, 4-methyl-2,3-pentanedione, 3,4-heptanedione, 5-methyl-2,3-hexanedione, 2,3-octanedione, 4,5-octanedione, 2,5-dimethyl-3,4-hexanedione, 5-methyl-3,4-heptanedione, 6-methyl-3,4-heptanedione, 1-phenyl-1,2-propanedione, 2,4-pentanedione, 2,4-hexanedione, 2,4-heptanedione, 1-phenyl-1,3-butanedione, 1-phenyl-1,3-pentanedione, 1,3-diphenyl-1,3-propanedione, 1-phenyl-2,4-pentanedione, 2,5-hexanedione, 3,4-dimethyl-2,5-hexanedione, 3,3,4,4-tetramehyl-2,5-hexanedione, 2,5-heptanedione, 3,6-octanedione, 6-methyl-2,5-heptanedione, 2,5-decanedione, 2,5-dodecanedione, and 1,4-diphenyl-1,4-butanedione.

Examples of the mixed ketones comprising an aliphatic moiety and a carbocycle or heterocycle include acetophenone, propiophenone, 2,2-diethoxyacetophenone, acetylpyrazine, 2-acetylpyridine, 3-acetylpyridine, 4-acetylpyridine, 2-acetylpyrrole, and 2-acetyl-1-tetralone.

The amount of ingredient (C2b) to be incorporated is preferably about from 0.1 to 20 parts, more preferably from 1 to 10 parts, per 100 parts of ingredient (A). When the amount of ingredient (C2b) incorporated is smaller than that range, there may be cases where the curing rate decreases. When the amount thereof is larger than that range, there may be cases where properties of the cured resin and adhesive properties are deteriorated. The compounds having one or more carbonyl groups enumerated above may be used singly or as a mixture of two or more thereof.

Ingredient (C3) in the invention is an inorganic filler whose surface has been treated with a silicate. Examples of the inorganic filler include calcium carbonate, zinc carbonate, zinc chloride, titanium dioxide, aluminum oxide, fumed silica, precipitated silica, quartz powder, carbon powder, talc, bentonite, zinc oxide, magnesium carbonate, asbestos, glass fibers, carbon fibers, fused quartz glass, and the like.

The silicate is a salt composed of silicon dioxide and a metal oxide. Examples thereof include sodium silicate, aluminum silicate, magnesium silicate, calcium silicate, potassium silicate, calcium sodium silicate, iron silicate, cobalt silicate, barium silicate, manganese silicate, and the like.

The inorganic filler surface-treated with a silicate has many silanol functional groups on the surface of the particles. These groups can react with hydrolyzable groups of the modified silicone in the presence of a silanol condensation catalyst. The number of the silanol functional groups present on the particle surface is always constant after formulation and does not depend on stirring conditions, reaction temperature, etc. For example, there is a technique for internally accelerating the curing of a moisture-curing resin by mixing an amine compound with a ketone compound to generate water. However, this technique, in which water is generated by a reaction between two components and this water is used to accelerate the reaction of hydrolyzable groups, is apt to result in fluctuations in curing rate depending on various conditions. In contrast, the composition of the invention can have a stable curing-accelerating effect.

Known methods may be used for the surface treatment. Those inorganic fillers are commercially available, and examples thereof include MSK-K and others manufactured by Tsuchiya Kaolin Ind., Co., Ltd.

The amount of this inorganic filler surface-treated with a silicate to be incorporated as ingredient (C3) is preferably about from 0.1 to 300 parts, more preferably from 1 to 200 parts, per 100 parts of ingredient (A). When the inorganic filler surface-treated with a silicate is incorporated in an amount smaller than that range, there may be cases where the curing rate decreases. On the other hand, when the inorganic filler surface-treated with a silicate is incorporated in an amount larger than that range, there may be cases where properties of the cured resin and adhesive properties are deteriorated.

A curing accelerator and an adhesion promoter are preferably further added to the composition of the invention. Examples thereof include silane coupling agents such as aminosilanes, e.g., γ-(2-aminoethyl)aminopropyltrimethoxysilane, γ-aminopropyltriethoxysilane, and γ-aminopropyltrimethoxysilane, mercaptosilanes, e.g., γ-mercaptopropyltrimethoxysilane, and epoxysilanes, e.g., γ-glycidoxypropyltrimethoxysilane. One or more of these compounds can be suitably used.

The amount of these curing accelerators and adhesion promoters to be used is preferably from 0.01 to 10 parts, especially preferably from 0.1 to 5 parts, per 100 parts of the total weight of the room-temperature-curing composition. In case where the amount of the curing accelerators and adhesion promoters incorporated is too small, this incorporation does not accelerate the curing rate. On the other hand, too large amounts thereof also are undesirable in that not only the cured resin to be obtained is deteriorated in properties such as elongation, but also the incorporation is economically disadvantageous.

In addition to the essential ingredients of (A) to (C) described above may be added, according to need, a reinforcer, fibrous filler, oil resistance improver, heat resistance improver, cold resistance improver, colorant such as a pigment or dye, thixotropic agent, dehydrant, rust preventive, adhesion improver, improver for adhesion to oily adherends, solvent, plasticizer, antioxidant, ultraviolet absorber, light stabilizer, flame retardant, surfactant, and the like. These may be added in appropriate amounts according to desired properties. Examples of the reinforcer include fumed silica, burned silica, precipitated silica, pulverized silica, fused silica, quartz powder; diatomaceous earth; iron oxide, zinc oxide, titanium oxide, barium oxide, magnesium oxide; precipitated calcium carbonate, heavy calcium carbonate; magnesium carbonate, zinc carbonate; pyrophyllite clay, kaolin clay, burned clay; carbon black, and the like.

In the case where (C1) or (C3) is used as ingredient (C), the composition of the invention is preferably prepared as a two-component type curing composition (kit) consisting of separately packed components which, for example, are a first component comprising ingredients (A) and (C) and a second component comprising ingredients (A) and (B). The first component and second component are mixed with each other upon use. By mixing the first component and second component, a crosslinking reaction occurs and the composition thus cures into a rubbery elastomer. The first component is obtained by uniformly mixing, in a dry atmosphere, given amounts of ingredients (A) and (B) described above together with appropriate amounts of other ingredients which are added according to need. The second component is obtained by uniformly mixing, in a dry atmosphere, given amounts of ingredients (A) and (C) described above together with appropriate amounts of other ingredients which are added according to need.

On the other hand, in the case where (C2a) and (C2b) are used as ingredient (C), the composition is preferably prepared as a two-component type curing composition (kit) consisting of separately packed components which, for example, are a first component comprising ingredients (A) and (C2a) and a second component comprising ingredients (A) and (C2b). The first component and second component are mixed with each other upon use. By mixing the first component and second component, a crosslinking reaction occurs and the composition thus cures into a rubbery elastomer. The first component is obtained by uniformly mixing, in a dry atmosphere, given amounts of ingredients (A) and (C2a) described above together with appropriate amounts of other ingredients which are added according to need. The second component is obtained by uniformly mixing, in a dry atmosphere, given amounts of ingredients (A) and (C2b) described above together with appropriate amounts of other ingredients which are added according to need.

### <Examples>

The invention will be illustrated in greater detail by reference to the following Examples, but the scope of the invention should not be construed as being limited thereto. In the following Examples, all the "parts" are given by weight.

### SYNTHESIS EXAMPLE 1: Production of Ingredient (A)

With 63.5 g of butyl acrylate were mixed 389 g of methyl methacrylate, 117 g of stearyl methacrylate, 30.5 g of TSMA (γ-methacryloxypropyldimethoxymethylsilane), 12.0 g of AIBN (azobisisobutyronitrile), and 255 g of xylene. The mixture was stirred to evenly dissolve the ingredients. A 30 g portion of this mixture was introduced into a 200-mL four-necked flask equipped with a stirrer and a condenser tube. The contents were heated at 80°C on an oil bath while passing nitrogen gas. After several minutes, polymerization began and heat generation occurred. After the heat generation had become mild, the remaining part of the mixture was gradually dropped over 3 hours with a dropping funnel to polymerize the mixture. At the time when heat generation had come not to be observed any more, the polymerization was terminated. The number-average molecular weight was 9,700, the conversion was 99%, and the resin solid content was 70%. This product is referred to as synthesis product a.

### EXAMPLES 1-1 TO 1-4

As ingredient (A) was used the synthesis product a or MA440, manufactured by Kaneka Corp. MA440 is a mixture of a copolymer which is made up of alkyl (meth)acrylate monomer units having an alkyl group having 1 to 8 carbon atoms and alkyl (meth)acrylate monomer units having an alkyl group having 10 to 30 carbon atoms and has an alkoxysilyl group at a molecular end with an oxyalkylene polymer containing a silicon having a hydrolyzable functional group. A hundred parts of the ingredient (A) was mixed with 3 parts of γ-aminopropyltrimethoxysilane (A-1110, manufactured by Nippon Unicar), 2 parts of dibutyltin dimethoxide (SCAT-27, manufactured by Sankyo Organic Chemicals), and 70 parts of calcium carbonate in the absence of water. This mixture was degassed under vacuum to prepare a first component. Separately, 100 parts of the same room-temperature-curing modified silicone MA440 as that used for preparing the first component was mixed with 75 parts of gypsum (CaSO₄·2H₂O) in the absence of water. This mixture was degassed under vacuum to prepare a second component.

### EXAMPLES 2-1 TO 2-4

As ingredient (A) was used the synthesis product a or MA440, manufactured by Kaneka Corp. MA440 is a mixture of a copolymer which is made up of alkyl (meth)acrylate monomer units having an alkyl group having 1 to 8 carbon atoms and alkyl (meth)acrylate monomer units having an alkyl group having 10 to 30 carbon atoms and has an alkoxysilyl group at a molecular end with an oxyalkylene polymer containing a silicon having a hydrolyzable functional group. A hundred parts of the ingredient (A) was mixed with 3 parts of γ-aminopropyltrimethoxysilane (A-1110, manufactured by Nippon Unicar), 3 parts of dibutyltin dimethoxide (SCAT-27, manufactured by Sankyo Organic Chemicals), and 70 parts of calcium carbonate in the absence of water. This mixture was degassed under vacuum to prepare a first component. Separately, 100 parts of the same room-temperature-curing modified silicone MA440 as that used for preparing the first component was mixed with 2 parts of cyclohexanone and 74 parts of calcium carbonate in the absence of water. This mixture was degassed under vacuum to prepare a second component.

### EXAMPLES 3-1 TO 3-4

As ingredient (A) was used the synthesis product a or MA440, manufactured by Kaneka Corp. MA440 is a mixture of a copolymer which is made up of alkyl (meth)acrylate monomer units having an alkyl group having 1 to 8 carbon atoms and alkyl (meth)acrylate monomer units having an alkyl group having 10 to 30 carbon atoms and has an alkoxysilyl group at a molecular end with an oxyalkylene polymer containing a silicon having a hydrolyzable functional group. A hundred parts of the ingredient (A) was mixed with 3 parts of γ-aminopropyltrimethoxysilane (A-1110, manufactured by Nippon Unicar), 2 parts of dibutyltin dimethoxide (SCAT-27, manufactured by Sankyo Organic Chemicals), and 70 parts of calcium carbonate in the absence of water. This mixture was degassed under vacuum to prepare a first component. Separately, 100 parts of the same room-temperature-curing modified silicone MA440 as that used for preparing the first component was mixed with 75 parts of a calcium carbonate surface-treated with a silicate (MSK-K, manufactured by Tsuchiya Kaolin Ind. Co., Ltd.) in the absence of water. This mixture was degassed under vacuum to prepare a second component.

### COMPARATIVE EXAMPLES 1 TO 3

A hundred parts of room-temperature-curing modified silicone MA440 was mixed with 3 parts of γ-aminopropyltrimethoxysilane, 3 parts or 2 parts of dibutyltin dimethoxide, and 70 parts of calcium carbonate in the absence of water. This mixture was degassed under vacuum to prepare a one-component type moisture-curing composition.

Rubber Property Evaluation Test: The composition of each of the Examples and Comparative Examples was allowed to stand at 23°C for 7 days between two Teflon sheets disposed to sandwich a 2-mm spacer therebetween. The composition was thus allowed to cure into a rubbery elastomer. Thereafter, the elastomer was examined for rubber properties. In the rubber property evaluation test, the tensile strength, elongation, and hardness of the cured rubber were measured in accordance with JIS K6301.

The formulations and rubber property results for Examples 1-1 to 1-4 are shown in Table 1.

The formulations and rubber property results for Examples 2-1 to 2-4 are shown in Table 2.

The formulations and rubber property results for Examples 3-1 to 3-4 are shown in Table 3.

**Table 1**

| | | Example 1-1 | Example 1-2 | Example 1-3 | Example 1-4 | Comparative Example 1 |
|---|---|---|---|---|---|---|
| First component | Synthesis product a | 100 | | | | |
| | MA440 | | 100 | 100 | 100 | 100 |
| | A-1110 | 3 | 3 | 3 | | 3 |
| | SCAT-27 | 2 | 2 | 2 | 2 | 2 |
| | Calcium carbonate | 70 | 70 | 70 | 70 | 70 |
| Second component | Synthesis product a | 100 | | | | |
| | MA440 | | 100 | 100 | 100 | |
| | CaSO₄·2H₂O | 75 | 75 | 40 | 40 | |
| | Calcium carbonate | | | 35 | 29 | |
| | A-1110 | | | | 3 | |
| Rubber property | Tensile strength (MPa) | 4.2 | 5.2 | 5.5 | 5.4 | unable to be measured |
| | Elongation (%) | 280 | 270 | 290 | 285 | unable to be measured |
| | Hardness | A48 | A40 | A44 | A43 | unable to be measured |

**Table 2**

| | | Example 2-1 | Example 2-2 | Example 2-3 | Example 2-4 | Comparative Example 2 |
|---|---|---|---|---|---|---|
| First component | Synthesis product a | 100 | | | | |
| | MA440 | | 100 | 100 | 100 | 100 |
| | A-1110 | 3 | 3 | | 3 | 3 |
| | Butylamine | | | 3 | 3 | |
| | SCAT-27 | 3 | 3 | 3 | 3 | 3 |
| | Calcium carbonate | 70 | 70 | 70 | 70 | 70 |
| Second component | Synthesis product a | 100 | | | | |
| | MA440 | | 100 | 100 | 100 | |
| | Cyclohexanone | 2 | 2 | 2 | 2 | |
| | Calcium carbonate | 74 | 74 | 74 | 77 | 76 |
| Rubber property | Tensile strength (MPa) | 4.2 | 5.0 | 4.8 | 5.5 | unable to be measured |
| | Elongation (%) | 280 | 275 | 295 | 290 | unable to be measured |
| | Hardness | A48 | A41 | A41 | A44 | unable to be measured |

**Table 3**

| | | Example 3-1 | Example 3-2 | Example 3-3 | Example 3-4 | Comparative Example 3 |
|---|---|---|---|---|---|---|
| First component | Synthesis product a | 100 | | | | |
| | MA440 | | 100 | 100 | 100 | 100 |
| | A-1110 | 3 | 3 | 3 | | 3 |
| | SCAT-27 | 2 | 2 | 2 | 2 | 2 |
| | Calcium carbonate | 70 | 70 | 70 | 70 | 70 |
| Second component | MA440 | 100 | 100 | 100 | 100 | |
| | MSK-K | 75 | 75 | 40 | 69 | |
| | Calcium carbonate | | | 30 | | 75 |
| | A-1110 | | | | 3 | |
| Rubber property | Tensile strength (MPa) | 8.3 | 7.1 | 6.5 | 7.0 | uncured |
| | Elongation (%) | 140 | 240 | 297 | 236 | uncured |
| | Hardness | A66 | A51 | A44 | A52 | uncured |

### <Industrial Applicability>

The composition of the invention is excellent in rapid curing property and depth curability. In the case where the composition is prepared as a two-component type composition, it can be formulated to enable the two components to be mixed in a ratio of 1:1 by volume or weight. Consequently, this two-component type composition has excellent suitability for practical use because of ease of metering, suitability for use with an automatic mixer or the like, etc.

## Claims

1. A room-temperature-curing composition which comprises:
(A) a polymer ingredient comprising a copolymer (A1) which contains a silicon having a hydrolyzable functional group and has a molecular chain substantially comprising (a) alkyl (meth)acrylate monomer units having an alkyl group having 1 to 8 carbon atoms and (b) alkyl (meth)acrylate monomer units having an alkyl group having 10 to 30 carbon atoms;
(B) a moisture curing catalyst; and
(C) any of the following (C1) to (C3):
(C1) a metal salt hydrate;
(C2) a primary amine compound (C2a) and a compound having a carbonyl group (C2b);
and
(C3) an inorganic filler surface-treated with a silicate.

2. The room-temperature-curing composition of claim 1, wherein ingredient (A) further comprises an oxyalkylene polymer (A2) containing a silicon having a hydrolyzable functional group.

3. The room-temperature-curing composition of claim 1 or 2, wherein ingredient (C) is the metal salt hydrate (C1).

4. The room-temperature-curing composition of claim 3, which comprises a first component comprising ingredient (A) and ingredient (B) and a second component comprising ingredient (A) and ingredient (C).

5. The room-temperature-curing composition of claim 1 or 2, wherein ingredient (C) is the inorganic filler (C3) surface-treated with a silicate.

6. The room-temperature-curing composition of claim 5, which comprises a first component comprising ingredient (A) and ingredient (B) and a second component comprising ingredient (A) and ingredient (C).

7. The room-temperature-curing composition of claim 1 or 2, wherein ingredient (C) comprises the primary amine compound (C2a) and the compound having a carbonyl group (C2b).

8. The room-temperature-curing composition of claim 7, which comprises a first component comprising ingredient (A) and ingredient (C2a) and a second component comprising ingredient (A) and ingredient (C2b).
